# EUROPEAN PATENT APPLICATION

(11) **EP 3 789 137 A1**
(43) Date of publication of application: **10.03.2021**
(21) Application number: 19195644.0
(22) Date of filing: 05.09.2019
(51) Int. Cl.: B22F 5/00, B22F 7/06, B33Y 80/00, B22F 3/02, B22F 3/10, B22F 9/02, B22F 3/105, B22F 9/04, H01F 1/055, H01F 1/057, H01F 1/09, H01F 41/02, C22C 1/05

(54) **HIGH-RESISTIVITY PERMANENT MAGNETS, THEIR PREPARATION AND THEIR APPLICATION IN ELECTRICAL MACHINES**

(71) Applicant: ABB Schweiz AG, 5400 Baden (CH)
(72) Inventor: Scherf, Lavinia Maria, 4310 Rheinfelden (CH); Jacimovic, Jacim, 5430 Wettingen (CH); Kessler, Reto, 5506 Mägenwil (CH); Tremelling, Darren, Raleigh, NC North Carolina 27502 (US); Shrestha, Ghanshyam, Cary, NC North Carolina 27513 (US)
(74) Representative: Zimmermann & Partner Patentanwälte mbB

(57) **Abstract**

The present invention relates to high-resistivity permanent magnets, their preparation and their application in electrical machines. A permanent magnet according to the present invention comprises a permanent magnet comprising a magnetic material and a shaped inorganic insulating element, wherein a shape and a size of the shaped inorganic insulating element have been substantially unchanged by the sintering, wherein the shaped inorganic insulating element has a width and a length which are both at least 10 times larger than an average grain diameter of the magnetic material after sintering, and wherein an arithmetic average waviness Wa of an interface between the magnetic material and the shaped inorganic insulating element is less than 10% of a local wall thickness of the shaped inorganic insulating element after sintering.

## Description

### TECHNICAL FIELD

The present invention relates to high-resistivity permanent magnets, their preparation and their application in electrical machines. More specifically, the present invention relates to high-resistivity permanent magnets comprising a magnetic material and formed by sintering, and to their preparation and their application in electrical machines.

### BACKGROUND ART

Permanent magnets are used in electrical machines. However, permanent magnets may be metallic and have low electrical resistivity.

Because of the low electrical resistivity of metallic permanent magnets, electrical machines based on such magnets experience significant eddy current losses in the magnets. This effect directly reduces machine efficiency and generates heat inside the machine. If the resulting heat is not removed in some way, it further heats up the machine and magnets, which in turn reduces the torque that can be generated by a particular magnet or may even lead to partial demagnetization of the magnet. Thus, there is a desire to reduce eddy current losses originating from the permanent magnets in order to ensure high motor efficiency and to avoid additional heat generation.

For example, rare earth permanent magnets, such as neodymium magnets and samarium-cobalt magnets, have desirable magnetic properties. However, rare earth magnets are generally metallic and may be subject to such eddy currents.

Currently, when metallic magnets are used, one approach is to use several short magnets instead of one long magnet, in order to reduce the eddy current path length and thus the resulting losses. Such segmenting of magnets however increases the assembly effort.

The segmenting approach has also be used on a smaller scale. Permanent magnets are also available as laminated magnets consisting of thin layers of magnetic material separated by microlayers of insulating polymer materials. However, production is complicated.

Metallic magnets, such as rare earth magnets, may be prepared by sintering. Direct mixing of a magnetic powder with powders of insulating material may facilitate the manufacturing process, but does not yield satisfactory resistivity increases.

It has also been proposed to incorporate continuous layers of insulating powder in the sintering process of the sintered magnets. Continuous layers of insulating material have proven to increase magnet resistivity efficiently, but the preparation process involves a complex and laborious layering procedure.

Also, in such a process, it can be difficult to precisely control the final shape of the insulating material, because the powder of the insulating material will conform to the shape of the layer of the powder of the magnetic material underneath it. See, for example, Fig. 3a to 3c of *"*Internally Segmented Nd-Fe-B/CaF2 Sintered Magnets ", A. Gabay, M. Marinescu-Jasinski, J. Liu, and G. Hadjipanayis, IEEE Transactions on Magnetics, Vol. 49, No. 1. As a result, the insulating layer in the produced magnet may have an irregular shape or it may vary in thickness, which can reduce the effectiveness of the insulating layer, and adversely affect the magnetic properties of the magnet.

On the other hand, continuous layers of insulating powder can be incorporated into magnets by 3D printing. In typical 3D printing processes, the melt-pools may have a depth of roughly 40 µm and above, typically 100 µm or more. In this region, significant intermixing of magnetic material and the insulator materials will occur. Such intermixing can reduce the effectiveness of the insulating layer, and also adversely affect the magnetic properties of the magnet.

### SUMMARY OF THE INVENTION

### TECHNICAL PROBLEM

The objective of the present invention is to provide a permanent magnet which has excellent magnetic properties and high resistivity, and which can be produced by a simple process.

### SOLUTION TO THE PROBLEM

Various aspects of the present invention relate to the preparation and use of sintered magnets with increased electrical resistivity, and which can suppress eddy currents, particularly in electrical machines. Such magnets can be achieved by incorporating small amounts of insulating material that is shaped and placed strategically, so that it effectively blocks eddy current paths within the composite magnets.

Using such highly resistive sintered magnets in electrical machines, eddy current losses can be reduced, which reduces the heat generated in such machines and increases machine efficiency.

One aspect of the invention is a sintered permanent magnet made by co-sintering a powder of a magnetic material and a shaped inorganic insulating element, whereby a shape and a size of the shaped inorganic insulating element have been substantially unchanged by the sintering, wherein the shaped inorganic insulating element has a width and a length which are both at least 10 times larger than an average grain diameter of the magnetic material after sintering, and wherein an arithmetic average waviness Wa of an interface between the magnetic material and the shaped inorganic insulating element is less than 10% of a local wall thickness of the shaped inorganic insulating element after sintering.

Another aspect of the invention is a method for producing a permanent magnet, comprising: a step of placing a mixture inside a mold, the mixture comprising a powder of a magnetic material and a shaped inorganic insulating element, a step of compacting the mixture, and a step of sintering the mixture, wherein the step of sintering is performed after the step of compacting, or at the same time as the step of compacting, and wherein the shaped inorganic insulating element has a width and a length which are both at least 10 times larger than an average grain diameter of the magnetic material after sintering, and a shape and a size of the shaped inorganic insulating element are substantially unchanged by sintering.

Yet another aspect of the invention is an electric machine comprising a magnet as above.

Further aspects of the invention are as defined in the claims.

Sintered metallic magnets according to the present invention can be produced by a simple process, but will exhibit a significantly increased electrical resistivity. When employed in electrical machines, they increase the machine efficiency and lower heat generation in comparison to machines with ordinary metallic magnets.

### DESCRIPTION OF THE DRAWINGS

Fig. 1A is a view of the magnetic material according to the first embodiment of present invention, seen along the magnetization direction B.
Fig. 1B is a view of the magnetic material according to the second embodiment of present invention, seen along the magnetization direction B.
Fig. 2A is a perspective view showing a detail of the magnetic material according to the first embodiment of present invention.
Fig. 2B is a perspective view showing a detail of the magnetic material according to the first embodiment of present invention.

### DESCRIPTION OF EMBODIMENTS

### MAGNETIC MATERIAL

In the present invention, the magnetic material is any magnetic material which can form a permanent magnet by sintering. Preferably, the magnetic material is a metallic or electrically conductive magnetic material.

Examples of the magnetic material include rare earth magnetic materials. Rare earth magnetic materials generally include neodymium magnetic materials and samarium-cobalt magnetic materials. Specific examples of such rare earth magnetic materials include RE₂T₁₄B, RET₅, and RE₂T₁₇ structures, wherein RE is a rare earth element, T is a transition element, and B is boron.

Neodymium magnetic materials may include NdFeB magnets, which are characterized by a unique microstructure, containing the RE₂T₁₄B-type magnetic phase and RE-rich grain boundary phase. RE may be any rare earth element, preferably Nd. T is a transition metal, most preferably Fe. Other additives may also be added to improve performance or processability.

Examples of samarium-cobalt magnetic materials include SmCo₅ magnets and Sm₂Co₁₇ magnets.

The magnetic material to be co-sintered is a powder. The powder can, for example, be a jet-milled powder, an HDDR powder, or a melt-spun powder. The average particle diameter of the powder is not particluarly limited. For example, in the case of a jet-milled powder, it may preferably be 1.5 to 10 µm, more preferably 2 to 6 µm, and even more preferably 3 to 5 µm.

A grain diameter of the magnetic material in the permanent magnet after sintering is preferably no larger than 15 µm, preferably no larger than 10 µm, and more preferably no larger than 7 µm. Herein, "grain diameter" means a grain diameter obtained by SEM measurement by preparing a cross section through the middle of a magnet, polishing and etching the surface and then averaging the Feret diameter of more than 2000 grains measured at at least three different regions of the cross section (including center and edge portions).

### SHAPED INORGANIC INSULATING ELEMENT

The shaped inorganic insulating element comprises a material having a high electrical resistivity. The electrical resistivity of the shaped inorganic insulating element is preferably at least 10⁶ Ωcm, more preferably at least 10⁸ Ωcm, and even more preferably at least 10¹⁰ Ωcm.

According to one aspect of the invention, the shaped inorganic insulating element is suitably formed of an air- and water-stable solid at sintering conditions and should be unreactive with the magnetic material, and rheologically stable, under sintering conditions. Sintering conditions include, for examples, temperatures of 800 to 1400°C in the case of classical sintering, and 600 to 1000°C in the case of spark plasma sintering. For example, any ceramic material satisfying these conditions is suitable. For example, the shaped inorganic insulating element can be formed of fluorides, oxides, or sulfides of RE (rare earth) elements or Ca, and mixtures thereof.

Herein, "unreactive with the magnetic material under sintering conditions" means that significant amounts of new phases are not formed when sintering. In other words, the properties of the shaped inorganic insulating element and the magnetic material should not be affected due to reaction of the shaped inorganic insulating element and the magnetic material during sintering.

Also, the shape and size of the shaped inorganic insulating element should be substantially unchanged by the sintering.

In the present invention, the shaped inorganic insulating element is used in a pre-shaped form. In other words, the shaped inorganic insulating element has been shaped before the sintering.

Preferably, the shape of the shaped inorganic insulating element is a shape having a high aspect ratio, for example, platelets, plates, foams, honeycombs, grafted structures, etc.). Preferably, the shaped inorganic insulating element is dispersed in the powder of the magnetic material or placed functionally in layers or other regions. Herein, "dispersed in" means that the shaped inorganic insulating element is distributed throughout the magnetic material in an at least macroscopically homogenous manner. For example, in the case that the shaped inorganic insulating element has the form of platelets, the platelets are homogenously distributed on a scale of about 20 times the average grain size of the magnetic material.

The overall content of shaped inorganic insulating element in the permanent magnet is preferably less than 10wt. %, more preferably less than 5 wt. %, and even more preferably less than 2 wt. %, so that the magnet remanence is not impacted too heavily.

The lower limit of the content of the shaped inorganic insulating element is not particularly limited. However, the lower limit of the content of the shaped inorganic insulating element is preferably 0.001 wt.%, more preferably 0.01 wt.%, and even more preferably 0.1 wt.%, in view of obtaining a preferable resistivity.

In order to keep the fraction of insulating phase low and to block eddy currents efficiently in the sense of partial segmenting, the shaped inorganic insulating element should preferably have a high aspect ratio. For example, in the case that the shaped inorganic insulating element has the form of plateles, the ratio of average platelet length to average platelet thickness, and the ratio of the average platelet width to average platelet thickness, should be larger than 5, preferably larger than 10.

In the case that the shaped inorganic insulating element has the form of an open 3-dimensional network structure, the structure preferably has voids with openings large enough to allow entry of the powder of the magnetic material, and the volume of the voids is preferably large enough to allow the powder of the magnetic material to fill the structure.

In the permanent magnet, the shaped inorganic insulating element and the magnetic material may be arranged such that the magnetic material is continuous, so that the magnetic material percolates through the permanent magnet's volume. In such an arrangement, any 2 parts of the magnetic material can be connected by a trajectory which passes through only the magnetic material, without passing through the shaped inorganic insulating material.

Examples of an open 3-dimensional network structure are a honeycomb, a foam, or a grafted structure.

A local wall thickness of the shaped inorganic insulating element is defined as the average shortest dimension between interfaces between magnetic material/shaped inorganic insulating element interfaces. The local wall thickness of the shaped inorganic insulating element is preferably 0.1 to 200 µm, more preferably 0.2 to 100 µm, and even more preferably 0.5 to 50 µm. For example, in the case that the shaped inorganic insulating element has a form of platelets or plates, the local wall thickness is the average plate thickness. In the case that the shaped inorganic insulating element has a from of a honeycomb, the local wall thickness is the average thickness of the walls forming each side of the hexagons of the honeycomb.

In the case that the shaped inorganic insulating element has a form of platelets, the width and height of the platelets (i.e., the two dimensions other than the local wall thickness; the width and height may also be referred to as the "long" dimensions) are not particularly limited. However, from the viewpoint of obtaining effective reduction of eddy currents, the shaped inorganic insulating element preferably has a high aspect ratio. In the case of platelets, the height and width are each preferably at least 5 times larger than the local wall thickness of the platelets.

The shaped inorganic insulating element is preferably shaped and placed such that it can effectively block eddy current paths. This way, the electrical resistivity of the resulting magnet can be increased to the desired level while keeping the manufacturing process reasonably simple.

Since eddy currents flow perpendicular to the magnetization direction of the magnet, the direction of the local wall thickness of the shaped inorganic insulating element is preferably aligned perpendicular to the magnetization direction. Here, "perpendicular to the magnetization direction" means that an angle between the direction of the local wall thickness of the shaped inorganic insulating element, and a direction perpendicular to the magnetization direction is no more than 30°, preferably no more than 20°, more preferably no more than 10°, and even more preferably no more than 5°.

In the case of platelets, for example, the direction of the local wall thickness direction is the direction of the thickness of the platelets. In the case of a honeycomb, a for example, the direction of the local wall thickness may be a direction of the local wall thickness of at least one wall which forms the sides of the hexagons of the honeycomb.

Also, the direction of the local wall thickness of the shaped inorganic insulating element is preferably aligned parallel to the longest dimension of the magnet. Here, "parallel to the longest direction" means that an angle between the local wall thickness direction of the shaped inorganic insulating element and the longest dimension of the magnet deviates by no more than 30°, preferably no more than 20°, more preferably no more than 10°, and even more preferably no more than 5°, from a 90° angle.

### INTERFACE BETWEEN THE SHAPED INORGANIC INSULATING ELEMENT AND THE MAGNETIC MATERIAL

In the present invention, the interface between the shaped inorganic insulating element and the magnetic material is substantially free of an intermixing zone, and a shape of the interface follows a shape of the shaped inorganic insulating element.

Intermixing refers to diffusion of components of the magnetic material into the shaped inorganic insulating element, or diffusion of components of the shaped inorganic insulating element into the magnetic material, which may occur, for example, during a sintering process. By use of a shaped inorganic insulating element in the present invention, such intermixing is substantially absent, and the interface is well-defined.

Also, because a shaped inorganic insulating element is used in the present invention, when the shaped inorganic insulating element and a powder of the magnetic material are mixed before sintering, the powder of the magnetic material will conform to the shape of the shaped inorganic insulating element. As a result, in the sintered magnet, the interface will follow the shape of the shaped inorganic insulating element, whereby the interface and the shape of the interface can be readily defined and controlled.

Herein, the waviness of the interface does not refer to a property of a surface such as an air/solid interface. Instead, the waviness of the interface refers to the waviness of an interface between the magnetic material and the shaped inorganic insulating element, i.e., the waviness of the interface between two solid materials.

More specifically, an arithmetic average waviness Wa of the interface between the magnetic material and the shaped inorganic insulating element is less than 10% of a local wall thickness of the shaped inorganic insulating element after sintering. The arithmetic average waviness Wa of the interface between the magnetic material and the shaped inorganic insulating element can be measured by the following steps:
(1) Prepare a cross-section through the magnet such that one of the long dimensions of a shaped inorganic insulator element is perpendicular to the new surface.
(2) Use a scanning electron microscope to determine a primary profile of the interface between the magnetic material and the shaped inorganic insulating element in an interface region with a length of at least five times a local wall thickness along the second long dimension of the shaped inorganic insulating element by defining at least 500 location spots along this interface that are equally spaced with respect to the second long dimension of the shaped inorganic insulating element.
(3) From the primary profile of the interface, determine a waviness profile according to ISO 4287 and ISO 16610-21.
(4) From the waviness profile determine Wa according to ISO 4287.

### SINTERING

In the present invention, a permanent magnet is produced by co-sintering the shaped inorganic insulating element and a powder of the magnetic material. The co-sintering means co-processing by any sintering process, including also spark plasma sintering and hot pressing.

When a classical sintering technique is used to produce the magnet of the present invention, a mixture of the magnetic material and the shaped inorganic insulating element is compressed to a green body and then heated to a temperature of 800 to 1400°C, preferably 900 to 1300 °C, and more preferably 1000 to 1250 °C. Sintering times at maximum temperature are preferably 1 to 5 hours.

### SPARK PLASMA SINTERING

The magnet of the present invention can also be produced by a spark plasma sintering technique, also known as SPS, field-activated sintering technique (FAST) or pulsed electric current sintering (PECS).

Spark plasma sintering is an alternative manufacturing technique for magnets. By passing a current through a material inside a conductive mold, the material is compacted and sintered simultaneously. Typically, the spark plasma sintering process takes only a fraction of the time needed in classical sintering of green bodies and needs lower sintering temperatures (below 1000°C). Thus the high reactivity of the Nd-rich grain boundary phase in NdFeB magnet production is much less critical for SPSed magnets, facilitating the incorporation of insulating materials which can be used for the shaped inorganic insulating element.

By using the spark plasma sintering technique, it is possible to use lower sintering temperatures and shorter sintering times than in the conventional sintering process. Typically, spark plasma sintering of magnets such as NdFeB magnets is performed for a few minutes at temperatures below 1000°C. Thus, the selection of inorganic insulating materials which can be used for the shaped inorganic insulating element suitable for such high-resistivity composite magnets is larger.

In addition to offering a simple production method which can be flexibly tuned by varying the insulating material of the shaped inorganic insulating element, SPS also offers the option of directly producing magnets with rather complex shapes. This way, high-resistivity magnets can not only be made available for electrical machines requiring simple brick shape magnets, but also for other machine topologies, in which more complex magnet shapes can bring improvements in machine efficiency, compactness or reliability.

When producing a permanent magnet according to the present invention by SPS, the sintering temperature is preferably in the range of 600 to 1000°C.

When producing a permanent magnet according to the present invention by SPS, the sintering time at maximum temperature is preferably in the range of 1 to 20 minutes, more preferably 1 to 10 minutes.

### PRODUCTION PROCESS

A permanent magnet according to the present invention is produced by placing a powder of the magnetic material, and the shaped inorganic insulating element inside a mold to form a mixed material, compacting and sintering.

In the case that the shaped inorganic insulating element is an open network structure such as a honeycomb or a foam, for example, the open network structure may be prepared in advance and filled with the magnetic material, to prepare the mixed material. In the case that the shaped inorganic insulating element has the form of platelets, for example, the platelets are mixed with the magnetic material, and the platelets may be aligned as desired. Techniques for aligning the platelets in the mixed material may, for example, be applying a light shear stress by extrusion, rolling, spreading of the mixed material, or the like.

In the method of the present invention, compacting of the mixed material is performed. Compacting may occur without application of a magnetic field, or compacting may occur in the presence of a magnetic field to achieve magnetic alignment.

A magnetic field may optionally be applied before compaction to achieve magnetic alignment.

Also, compaction may be performed simultaneously with the sintering.

The sintering in the process according to the present invention may be conventional sintering or hot pressing, or may be Spark Plasma Sintering.

A reference example of a process for producing a magnet using SPS which is useful for understanding the present invention is as follows. An inorganic insulating material in a loose powder form is thoroughly mixed with a powder of the magnetic material. The mixture of the powder of the magnetic material and the inorganic insulating material in a loose powder form are placed inside a mold as desired. For anisotropic magnetic materials, the powder is then magnetically aligned in a magnetic field. Then, the materials are co-sintered under suitable spark plasma sintering conditions. Further heat treatment and surface finishing may follow if necessary.

Another reference example of a process for producing a magnet using SPS which is useful for understanding the present invention is as follows. An inorganic insulating material in a loose powder form is placed functionally, in layers or other regions, in a powder of the magnetic material. The mixture of the powder of the magnetic material and the inorganic insulating material in a loose powder form are placed inside a mold as desired. For anisotropic magnetic materials, the powder is then magnetically aligned in a magnetic field. Then, the materials are co-sintered under suitable spark plasma sintering conditions. Further heat treatment and surface finishing may follow if necessary.

An example of a process for producing a permanent magnet according to the present invention is a follows.

A magnet according to the present invention exhibits a high resistivity compared to a conventional magnet consisting of the same magnetic material. For example, conventional NdFeB magnets typically have an electrical resistivity of 150 µΩcm, SmCo₅ magnets typically have an electrical resistivity of 5 to 6 µΩcm, and Sm₂Co₁₇ magnets typically have an electrical resistivity of 80 to 90µΩcm. However, a magnet according to the present invention comprising the same magnetic material as the conventional magnet preferably has a resistivity at least 2 times higher, more preferably 3 times higher, more preferably 5 times higher, more preferably 10 times higher, and even more preferably 20 times higher than conventional magnets.

### EMBODIMENTS

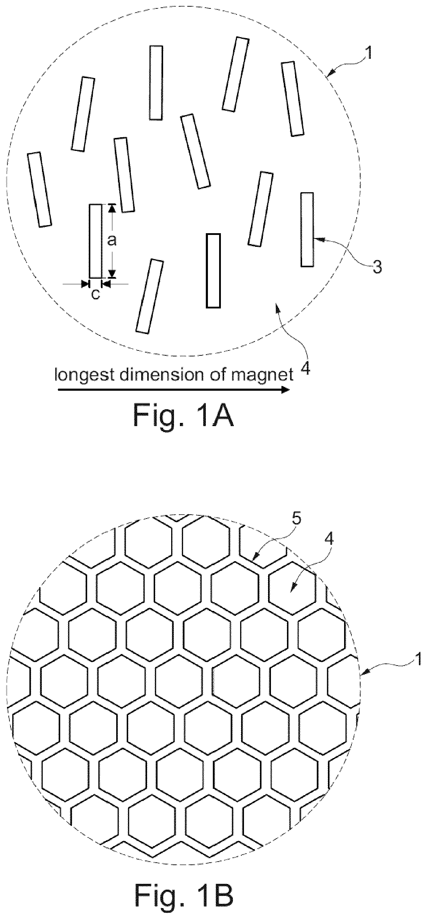

Fig. 1A shows a portion of a permanent magnet (1) according to one embodiment of the present invention, viewed along the magnetization direction. In this embodiment, the shaped inorganic insulating element (2) has the form of rectangular platelets (3) having an idealized cuboid shape, which have average dimensions of a width (a), a height (b) (not shown), and a thickness (c).

The platelets (3) are arranged in the magnetic material (4) such that a direction (c_{d}) of the local wall thickness (c), is aligned perpendicular to the magnetization direction of the permanent magnet.

Also, in the present embodiment, the platelets (3) are arranged in the magnetic material (4) such that a local wall thickness (c) direction of the shaped inorganic insulating element (2) is aligned parallel to the longest direction of the permanent magnet.

For the shaped inorganic insulating element of the present embodiment, the average local wall thickness of the platelets (3) is the average thickness (c), and the aspect ratio is (width(a) x height (b))/thickness (c).

Fig. 1B shows a portion of another permanent magnet (1), according to another embodiment of the present invention, viewed along the magnetization direction. In this embodiment, the shaped inorganic insulating element (2) has the form of a honeycomb (5), and the magnetic material (4) fills the inside of the honeycomb (5). In the present embodiment, the walls forming the honeycomb are aligned with the magnetization direction of the permanent magnet.

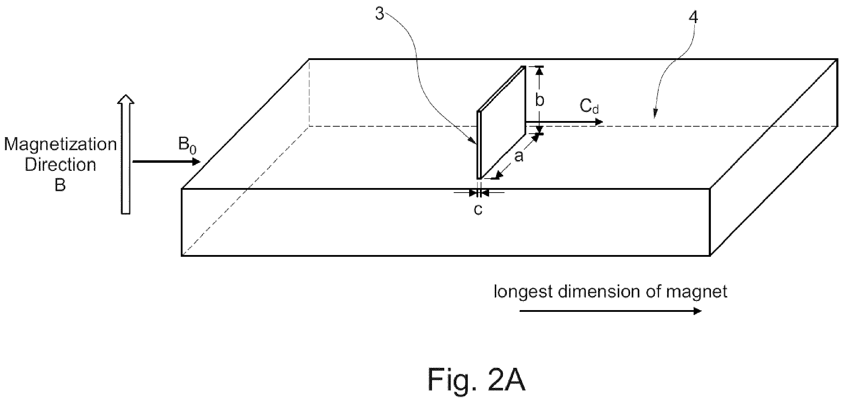

Fig. 2A is a perspective view showing the alignment of one platelet (3) in the magnetic material (4) of the first embodiment. As seen in Fig. 2A, the direction (c_{d}) is the direction of the local wall thickness (c) of the platelet (3) of the shaped inorganic insulating element (2). The direction (Bₒ) is a direction which is perpendicular to the magnetization direction (B) of the permanent magnet, while forming the smallest angle possible with respect to the direction (c_{d}). For the platelet shown in Fig. 2A, (c_{d}) is parallel to the direction (Bₒ); in other words, the direction of the local wall thickness is perpendicular to the magnetization direction.

Moreover, the direction c_{d} of the local wall thickness (c) direction of this platelet (3) is aligned parallel to the longest dimension of the permanent magnet.

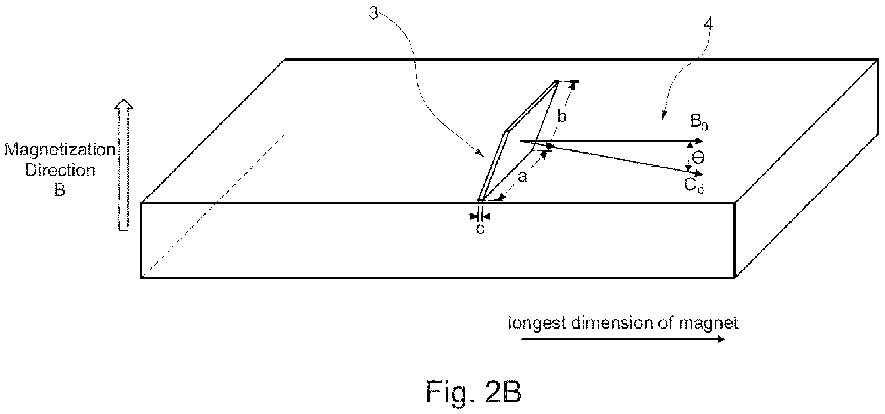

Fig. 2B is a perspective view showing the alignment of another platelet (3) in the magnetic material (4) of the first embodiment. As seen in Fig. 2B, the direction (c_{d}) of the local wall thickness (c) of a platelet (3) forms an angle θ with respect to the direction (Bₒ) which is perpendicular to the magnetization direction (B). However, in the present invention, the local wall thickness (c) direction of the shaped inorganic insulating element is considered to be aligned perpendicular to the magnetization direction (B) of the permanent magnet provided that this angle θ is no more than 30°, preferably no more than 20°, more preferably no more than 10°, and even more preferably no more than 5°.

An example of the production process according to the present invention is as follows. First, a NdFeB powder and the shaped inorganic insulating element are placed inside a mold. A green body is formed by pressing the mixed material in a magnetic field. Then, the materials are co-sintered under sintering conditions. Further heat treatment and surface finishing may follow if necessary.

The resulting composite magnets contain regions of insulating material. Possible microstructures are sketched in Figures 1A and 1B.

### APPLICATIONS

The permanent magnet according to the present invention can be used in electric machines which utilize a permanent magnet, for example motors or generators. Examples of specific applications are electrical machines with high torque density, e.g. wind power generators, large generators, Azipod® motors, traction motors for heavy electric vehicles or buses, other electric vehicles, light rail vehicles, monorail, other rail vehicles, low-voltage motors, and variable speed servo motors and the like.

### LIST OF REFERENCE NUMBERS

- 1: permanent magnet
- 2: shaped inorganic insulating element
- 3: platelets
- 4: magnetic material
- 5: honeycomb

## Claims

1. A method for producing a permanent magnet, comprising:
a step of placing a mixture inside a mold, the mixture comprising a powder of a magnetic material and a shaped inorganic insulating element,
a step of compacting the mixture, and
a step of sintering the mixture, wherein
the step of sintering is performed after the step of compacting, or at the same time as the step of compacting, and wherein
the shaped inorganic insulating element has a width and a length which are both at least 10 times larger than an average grain diameter of the magnetic material after sintering, and
a shape and a size of the shaped inorganic insulating element are substantially unchanged by sintering.

2. A method according to claim 1, wherein a local wall thickness of the shaped inorganic insulating element is at least five times smaller than both the width and the length of the shaped inorganic insulating element.

3. A method according to claim 1 or 2, wherein a sintering temperature is 800 to 1400°C, and a sintering time is 1 to 5 hr.

4. A method according to claim 1 or 2, wherein the sintering is spark plasma sintering.

5. A method according to any one of claims 1 to 4, wherein the magnetic material comprises a rare-earth element, and a transition metal, in particular wherein the magnetic material is an NdFeB magnetic material or an SmCo magnetic material.

6. A method according to any one of claims 1 to 5, wherein the shaped inorganic insulating element is chemically unreactive with the magnetic material at the sintering temperature.

7. A sintered permanent magnet made by co-sintering a powder of a magnetic material and a shaped inorganic insulating element, whereby a shape and a size of the shaped inorganic insulating element have been substantially unchanged by the sintering, wherein
the shaped inorganic insulating element has a width and a length which are both at least 10 times larger than an average grain diameter of the magnetic material after sintering and wherein
an arithmetic average waviness Wa of an interface between the magnetic material and the shaped inorganic insulating element is less than 10% of a local wall thickness of the shaped inorganic insulating element after sintering.

8. A permanent magnet according to claim 7, wherein the local wall thickness of the shaped inorganic insulating element is at least five times smaller than both the width and the length of the shaped inorganic insulating element.

9. A permanent magnet according to any one of claims 7 to 8, wherein the shaped inorganic insulating element has a planar form, or a form of an open 3-dimensional network structure.

10. A permanent magnet according to any one of claims 7 to 9, wherein the average grain diameter of the magnetic material after sintering is 1.5 to 10 µm.

11. A permanent magnet according to any one of claims 7 to 10, wherein a local wall thickness of the shaped inorganic insulating element is aligned perpendicular to a magnetization direction of the permanent magnet.

12. A permanent magnet according to any one of claims 7 to 11, wherein a content of the shaped inorganic insulating element is less than 10 wt% of the permanent magnet.

13. A permanent magnet according to any one of claims 7 to 12, wherein the magnetic material comprises a rare-earth element, and a transition metal, in particular wherein the magnetic material is an NdFeB magnetic material or an SmCo magnetic material.

14. A permanent magnet according to any one of claims 7 to 13, wherein a resistivity of the shaped inorganic insulating element is at least 10⁶ Ωcm.

15. A permanent magnet according to any one of claims 7 to 14, produced by the method according to any one of claims 1 to 6.

16. An electric machine comprising a permanent magnet according to any one of claims 7 to 15.
